# EUROPEAN PATENT APPLICATION

(11) **EP 2 573 729 A1**
(43) Date of publication of application: **27.03.2013**
(21) Application number: 11290425.5
(22) Date of filing: 20.09.2011
(51) Int. Cl.: G06Q 50/00, G06Q 40/00

(54) **Method of processing resource transfer data**

(71) Applicant: Alcatel Lucent, 75007 Paris (FR)
(72) Inventor: Weigmann, Walter, 90765 Fürth (DE); Templ, Wolfgang, 74372 Sersheim (DE)
(74) Representative: Louis Pöhlau Lohrentz

(57) **Abstract**

The invention concerns a method of processing resource transfer data associated with one or more individual consumers, and a module (6) and a computer program product to execute this method. A data connection to an electronic data base (1) storing resource transfer data (2) associated with one or more consumers is established. The resource transfer data (2) indicate measurement data (20) about metered quantities of resources transferred between the respective consumers and one or more respective resource providing entities. The data base (1) is accessed and individual resource transfer data (2) associated with at least one consumer of the one or more consumers are retrieved from the data base (1). The retrieved data (2) are transmitted via a data connection to the module (6). A processing unit (62) of the module (6) generates a resource transfer declaration based on the at least one consumer's individual resource transfer data (2) whereby the resource transfer declaration specifies data about a resource transfer balancing.

## Description

The present invention relates to a method of processing resource transfer data associated with one or more individual consumers, and a module and a computer program product to execute said method.

Smart metering systems and the approach to measure each and every consumption of resources, e.g. electricity, gas, or water, become more and more common. This metering of consumed resources may include or assist a determination of a load or pollution of a natural resource such as air or water. Today consumers not only consume resources provided via distribution networks, e.g. electricity supplied by a supplier of electric energy, but they also supply resources to distribution networks themselves, e.g. electricity generated by a photovoltaic system owned by the consumers. The consumption and feed-in of resources from and into distribution networks by consumers can be seen as a transfer of resources between the consumers and the distribution networks, i.e. a resource transfer.

It is the object of the present invention to provide an improved processing of data concerning resource transfers.

The object of the present invention is achieved by a method of processing resource transfer data associated with one or more individual consumers, comprising the steps of: establishing a data connection to an electronic data base storing resource transfer data associated with one or more consumers whereby the resource transfer data indicate measurement data about metered quantities of resources transferred between the respective consumers and one or more respective resource providing entities; accessing the data base and retrieving from the data base individual resource transfer data associated with at least one consumer of the one or more consumers; transmitting the retrieved data via a data connection to a processing unit; and generating, by the processing unit, a resource transfer declaration based on the at least one consumer's individual resource transfer data whereby the resource transfer declaration specifies data about a resource transfer balancing. The object of the present invention is further achieved by a module for processing an individual consumer's resource transfer data, comprising: a communication unit adapted to establish a communication connection to an electronic data base storing resource transfer data associated with one or more consumers whereby the resource transfer data indicate measurement data about metered quantities of resources transferred between the respective consumers and one or more respective resource providing entities, access the data base and retrieve from the data base individual resource transfer data associated with at least one consumer of the one or more consumers, and transmit the retrieved data via a data connection; and a processing unit adapted to receive the retrieved data via a data connection and generate a resource transfer declaration based on the at least one consumer's individual resource transfer data whereby the resource transfer declaration specifies data about a resource transfer balancing. And the object of the present invention is achieved by a computer program product for processing an individual consumer's resource transfer data, whereby the computer program product, when executed by a module, performs the steps of: initiating an establishment of a data connection to an electronic data base storing resource transfer data associated with one or more consumers whereby the resource transfer data indicate measurement data about metered quantities of resources transferred between the respective consumers and one or more respective resource providing entities; controlling an access to the data base and a retrieval from the data base of individual resource transfer data associated with at least one consumer of the one or more consumers; controlling a transmission of the retrieved data via a data connection to a processing unit; and controlling a generation, by the processing unit, of a resource transfer declaration based on the at least one consumer's individual resource transfer data whereby the resource transfer declaration specifies data about a resource transfer balancing.

The term "consumer" comprises any natural or legal person which consumes or feeds in at least one resource and which can made responsible for a resource transfer. Preferably, a consumer is obliged to pay taxes to a taxing authority, e.g. a national authority, state administration or an international authority like the United Nations.

The term "resource providing entity" comprises an entity which provides a resource which can be consumed or supplied by a consumer. Typical examples are an electric power provider, a water works, a fuel supplier. In case of a natural resource which is deemed to be public, such as air, the respective resource providing entity is the political authority, preferably the state, associated with the territory where the consumption of this public resource takes place. Preferably the political authority serves as a resource protecting entity which does not limit the consumption of a public natural resource such as air but only a modification of a natural resource, e.g. a load of the natural resource with pollutants. In the context of a natural resource which is deemed to be public, the term "resource providing entity" includes the term "resource protecting entity".

The measurement data comprise data about the measurements of quantities of resources transferred between the respective consumers and one or more respective resource providing entities. Preferably, the measurement data comprise measured data indicating quantities of the resources. It is advantageous that the measurement data also comprise one or more of: a time and a date of the transfer, an identification of a consumer associated with the transfer, an identification of the transferred resource.

A transfer of a resource from one or more respective resource providing entities to a consumer and a subsequent consumption of the transferred resource by the consumer may result in a load or a pollution of a natural resource such as air or water. For example, the burning of petrol in a combustion engine leads to an emission of carbon dioxide. Thus, the acquisition of a resource by a consumer, e.g. a refuelling with petrol at a filling station, may result in measurement data comprising the metered amount of acquired resource and a corresponding estimated amount of emitted pollutants, e.g. of carbon dioxide and nitrogen oxides to the air. Alternatively it is possible that the amount of emitted pollutants is directly measured, e.g. by means of a pollutant sensor monitoring exhaust gases or sewage water. Thus the term "metered quantities of resources transferred between the respective consumers and one or more respective resource providing entities" includes quantities of pollutants emitted by the consumers, so-called loads, whereby the quantities of pollutants may be directly metered or derived from metered quantities of other resources.

The term "resource transfer balancing" comprises a balancing of quantities of a resource consumed and fed-in by an individual consumer. Based on the resource transfer balancing, a taxing authority may generate a clearing, i.e. either a service in favour of the consumer, e.g. a payment to a consumer's giro account, or a service to be rendered by the consumer, e.g. a tax payment by the consumer.

As mentioned above, smart metering systems and the approach to measure each and every consumption of resources such as electricity, gas, water, and air become more and more common. The present invention is based on the idea that all those metered data can be collected for one single individual and stored in a common data base, thus enabling interested authorities to create a "resource consumption tax or incentive" system and influencing the individual's behaviour by visualising the consumed resources or the amount of resource load (= pollution). The data collection, the data transfer, data storage and data processing must be performed in a highly secured communication network. The access to the data must be possible only for authorised parties.

Governments or other social authorities are interested in being informed about the entire overall resource consumption of individuals in their community. This information enables to create "resource consumption declarations" for the individual in specific timelines.

In order to leverage the known "tax declaration" towards a "resource consumption declaration" and to guarantee transparency as well as flexibility and to allow the individual do adapt their behaviour, preferably instantaneously, to the - ever changing - ecological constraints such system should be based on a secure and highly networked data acquisition and processing infrastructure performing functions like: electricity/water/gas/ metering, tariffing, tax accounting, visualisation.

On the other hand, similar to a tariff-based smart grid load balancing system embodiments of the present invention might be used to control and optimize individual energy consumption depending on the energy source, e.g. renewable, fossil or nuclear, and the amount of available energy. As for e-mobility scenarios in a similar manner embodiments of the present invention might be used to control road pricing, possibly of public roads, and traffic control.

Embodiments of the present invention contribute to a fair allocation of tax rates considering - besides others - an individual's ecological footprint. Based on real time functionality embodiments of the present invention may adapt tax rates to external ecological and societal border conditions and enable individuals to adjust their behaviour according to changing conditions.

Embodiments of the present invention can be used so that an ecological "misbehaviour" can directly result in payments to the society, other than with cost/price based control of individual behaviour. Embodiments of the present invention provide transparency, flexibility and interaction between an individual's behaviour and the societal/ecological cost bill of its consequences.

Embodiments of the present invention can be implemented in metering and accounting or smart grid product solutions.

Further advantages are achieved by embodiments of the invention indicated by the dependent claims.

According to an embodiment of the invention, the method further comprises the steps of: receiving, by the data base, authentication data sent by an entity requesting an access to the data base; validating the received authentication data by the data base; and if the validation is successful, accepting, by the data base, the access to the data base by the requesting entity. As the data base contains data which may be used as a basis for a tax allocation process, it is crucial for the trustworthiness of such a tax allocation process that a fraudulent manipulation of the data contained in the data base is made highly impossible. This advantageous high level of security can be maintained if an entity requesting access to the data base is required to prove its authorisation before it is allowed to access the data base.

According to an embodiment of the invention, the method further comprises the steps of: forwarding the resource transfer data to a further application, preferably a tax accounting application, for further processing. Knowledge about the entire overall resource consumption of individuals in their community allows to create "resource consumption declarations" for the individual in specific timelines. A tax allocation to individuals of a society based on an overall resource consumption or feed-in of the society's individuals might contribute to rise individual awareness of consumption of natural and energy resources. A tax system based on these values might get a new aspect of fairness by relating a person's tax debt directly to their ecological footprint and the consumed societal "services".

According to an embodiment of the invention, the method further comprises the steps of: receiving at the data base the measurement data about metered quantities of resources transferred between the respective consumers and the one or more respective resource providing entities; and storing the measurement data as the resource transfer data in the data base. The quantities of resources transferred between the respective consumers and the one or more respective resource providing entities are measured by metering units, also referred to as meters, which may be ubiquitous, e.g. gas meters, water meters, electricity meters. The measurement data created by the metering units are sent via wire-line or wireless data transmission paths to the data base. The data transmission can be according to one or more known transmission protocols, e.g. GSM (= Global System for Mobile Communications) or GPRS (= General Packet Radio Service).

According to an embodiment of the invention, receiving at the data base the measurement data further comprises: receiving, by the data base, authentication data sent by a meter; validating, by the data base, the received authentication data; and if the validation is successful, accepting, by the data base, measurement data about metered quantities sent by the meter. As the data base contains data which may be used as a basis for a tax allocation process, it is crucial for the trustworthiness of such a tax allocation process that a fraudulent manipulation of the data contained in the data base is made highly impossible. This advantageous high level of security can be maintained if an entity requesting to add measurement data to the data base is required to prove its authorisation before it is allowed to access the data base and store measurement data to the data base.

Preferably, the metered quantities of resources are certified measurement data, i.e. a supervising authority makes sure that the measurement data are reliable. To this end, metering units may be supervised by a supervising authority. The supervising authority may be a public monitoring authority. The supervising authority may check that the metering units which provide measurement data are gauged and deliver correct measurement data.

According to another embodiment of the invention, generating the resource transfer declaration based on the at least one consumer's individual resource transfer data comprises: reading the at least one consumer's individual resource transfer data from the data base; balancing the measurement data about at least one consumer's individual consumed and fed-in quantities of resources; and sending data about the at least one consumer's balance to the respective consumer. A consumer may obtain a first quantity of a first resource from a distribution network and feed a second quantity of this first resource into the same or a different distribution network. Then balancing the measurement data about at least one consumer's individual consumed and fed-in quantities of resources comprises a determination if the net transfer of the first and second quantities means a consumption or feed-in of this resource by the consumer. Data about the resulting quantity, i.e. the net transfer quantity, of the resource is then transmitted to the consumer.

The resource transfer declaration can be generated on arbitrary time lines, like after pre-defined time periods, e.g. once a day, or whenever a net transfer quantity exceeds a pre-defined threshold. The consumer thus has an immediate feed-back about his consumption and feed-in. This may help to him to adapt his behaviour. Preferably, the data about the at least one consumer's balance is sent to an electronic device of the respective consumer, preferably a mobile device. Thus, the consumer can immediately realise the resource-wise consequences of his behaviour.

According to an embodiment of the invention, the resources comprise one or more of: water, electricity, long-distance heating, gas, petrol, air. Also any other resource which can be measured in quantities can be included in the list of monitored resources.

According to an embodiment of the invention, the processing is performed in a communication network which is secured against unauthorised access. It may be preferable to transmit data which are to be stored in the data base and data which have been taken from the data base in an encrypted form to avert attempts of fraudulent manipulation of the data during their transmission.

According to an embodiment of the invention, the module comprises the data base. An implementation of the data base into the module has the advantage that the transmission of data from the data base to the module can be highly secured against fraudulent manipulations.

According to an embodiment of the invention, the communication unit is adapted to receive tariffing data and forward the data to the processing unit. The debt, ecologic or economic, associated with the consumption of a resource, and vice versa the advancement or benefit, ecologic or economic, rendered by a feed-in of a resource by a consumer may depend on external ecological and societal constraints and is bound to continuously change. A transfer of a resource transfer declaration into a tax account or a tax declaration requires a weighting of a resource quantity with factors which define the ecologic or economic damage or benefit the consumption or feed-in of this resource quantity means to the society for which the tax is demanded. These factors can be interpreted as tariffs. Thus the communication unit is adapted to receive tariffing data specifying these tariffs from an evaluating authority and forward the data to the processing unit. Preferably, the processing unit evaluates the measurement data by weighting the metered resource amounts received from the metering units by the above mentioned factors defining the ecologic or economic damage or benefit.

These as well as further features and advantages of the invention will be better appreciated by reading the following detailed description of exemplary embodiments taken in conjunction with accompanying drawings of which:
- Fig. 1: shows a diagram of a collection and storage of data according to an embodiment of the invention; and
- Fig. 2: shows a diagram illustrating dependencies encountered in a method according to an embodiment of the invention message.

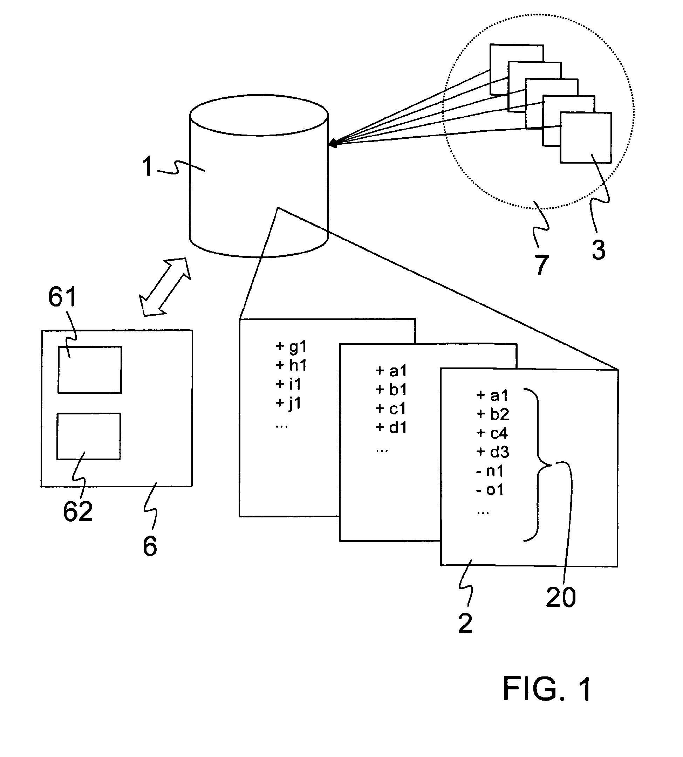

Fig. 1 shows an electronic data base 1 which contains resource transfer data 2 associated with a consumer. The electronic data base 1 may be composed of one or several inter-linked computers, i.e., a hardware platform, a software platform basing on the hardware platform and several application programs executed by the system platform formed by the software and hardware platform.

The resource transfer data 2 comprise a first data sub-set associated with the consumer's private activities, a second data sub-set associated with the consumer's professional activities, and a third data sub-set associated with the consumer's other activities, e.g. when the consumer is hospitalised. The resource transfer data 2 comprise measurement data 20 about metered quantities of resources transferred between the respective consumers and one or more respective resource providing entities. The data sub-set 2 associated with the consumer's private activities comprise measurement data 20 including the positive measurement data entries +a1, +b2, +c4, +d3, and the negative measurement data entries -n1, -o1. Each entry defines a type of resource and the respective quantity, either consumed or fed-in by the consumer. For example, the data sub-set 2 associated with the consumer's private activities indicates that the consumer has consumed one unit of resource a, two units of resource b, four units of resource c, and three units of resource d. On the other hand, the consumer has fed in one unit of resource n, and one unit of resource o. Corresponding statements can be made about the consumer's professional and other activities.

The resource transfer data 2 contained in the data base 1 are collected from a plurality of metering units 3. A metering unit 3, adapted to measure quantities of a specific resource, e.g. water, measures a transfer of a certain amount of this resource between the respective consumer and one or more respective resource providing entities. It is possible that the metering unit 3 transmits measurement data, preferably comprising a measure value specifying a measured quantity, to the data base 1 at pre-defined points of time. Before the metering unit 3 is allowed to access the data base 1 it must send identification and authorisation data to the data base 1. It is only in case of a positive validation of the metering unit's authorisation that the metering unit 3 is allowed to access the data base 1. This ensures a protection against forgery.

In order to make sure that the measurement data transmitted by the metering units 3 are reliable, the metering units 3 are supervised by a supervising authority 7. The supervising authority 7, which may be a public monitoring authority, controls that the metering units 3 are gauged and deliver correct measurement data, in particular that the measure values specifying a measured quantity are correct.

Connected via a data connection with the electronic data base 1 is a module 6 for processing an individual consumer's resource transfer data 2. The module 6 comprises a communication unit 61 and a processing unit 62. The data connection may be a wire-line or a wireless connection. A transmission of data through the data connection may be according to a standard data transmission protocol, e.g. HTTP (= Hypertext Transfer Protocol). The communication unit 61 is adapted to establish a communication connection to the electronic data base, access the data base 1, retrieve from the data base 1 individual resource transfer data 2 associated with at least one consumer of the one or more consumers, and transmit the retrieved data 2 to the processing unit 62. The processing unit 62 is adapted to receive the retrieved data 2 via a data connection and generate a resource transfer declaration based on the at least one consumer's individual resource transfer data 2 whereby the resource transfer declaration specifies data about a resource transfer balancing.

The module 6 is composed of one or several inter-linked computers, i.e., a hardware platform, a software platform basing on the hardware platform and several application programs executed by the system platform formed by the software and hardware platform. The functionality of the module 6 is provided by the execution of these application programs. The application programs or a selected part of these application programs constitute a computer software product providing a data processing service as described above, when executed on the system platform. Further, such computer software product is constituted by a storage medium storing these application programs or said selected part of application programs.

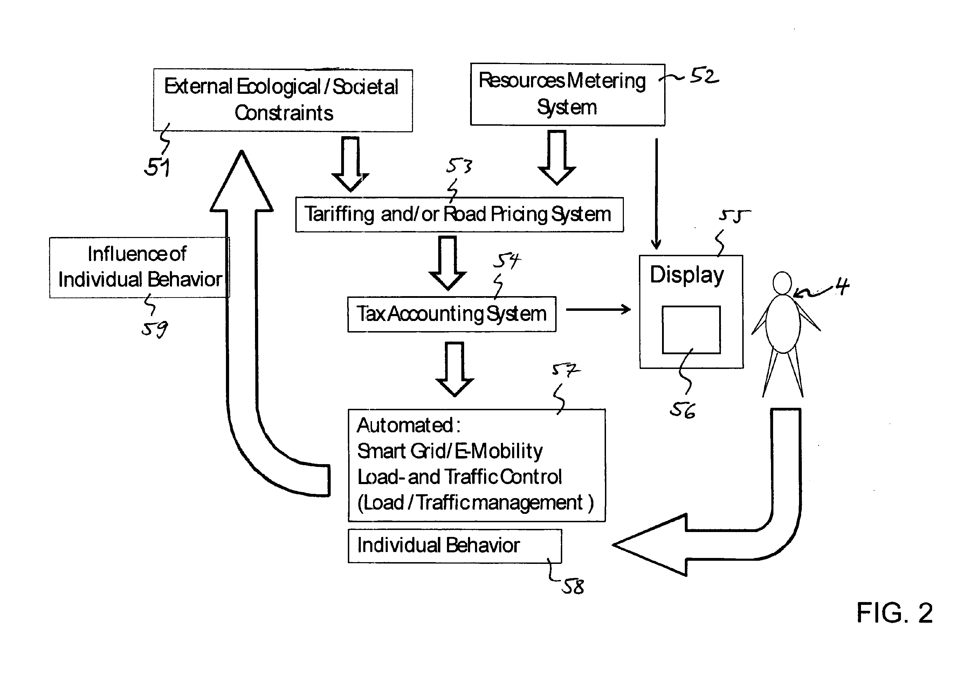

Fig. 2 shows a block diagram which illustrates a flow of information according to a preferred embodiment of the invention. Fig. 2 shows a resources metering system 52 which could be realised as shown in Fig. 1. Fig. 2 also shows a source specifying external ecological and/or societal constraints 51 which can be seen as weighting factors of a resource with regard to other resources for defining an ecologic or economic damage or benefit the consumption or feed-in of this resource means to a society. For example, a renewable fuel, e.g. wood, may have a lower carbon dioxide factor than a fossil fuel, e.g. fuel oil. On the other hand, a dust factor may indicate that the burning of wood produces more dust than the burning of fuel oil, whereby dust may be harmful to the respiratory tract of members of the society.

The source of external ecological and/or societal constraints 51 and the resources metering system 52 transmit corresponding data to a tariffing and/or road pricing system 53. Based on the consumption of a resource 52 and available weighting factors of this resource 51, the tariffing and/or road pricing system 53 establishes a resource transfer balancing. For example if a consumer 4 consumes a first quantity of a resource, e.g. electricity which is produced in a coal-burning power plant, and produces and feeds in a second quantity of electricity produced by a photovoltaic system owned by the consumer, these two quantities have to be balanced by comparing their metered amounts and their external ecological and/or societal constraints. This balancing is performed by the tariffing and/or road pricing system 53.

The balancing performed by the tariffing and/or road pricing system 53 results in a resource transfer declaration, preferably specifying a net effect of the consumer's consumption and feeding-in. The tariffing and/or road pricing system 53 transmits the resource transfer declaration to a tax accounting system 54. Based on the resource transfer declaration, the tax accounting system 54 may establish a tax declaration. The tax declaration may assign to a consumer's consumption and feeding-in item a corresponding obligation to be fulfilled by the consumer, e.g. a sum of money to be paid by the consumer, or a benefit to be supplied to the consumer, e.g. a sum of money to be paid to the consumer. Another preferred benefit to be supplied to the consumer may be energy credits allocated to the consumer and which the consumer may exchange in order to be allowed to an activity which consumes resources, e.g. a flight.

The resources metering system 52 and/or the tax accounting system 54 transmit data associated with a consumer 4 to an electronic device 55 of the consumer 4. The electronic device 55 comprises a display 56 which displays the received data associated with the consumer 4. The consumer 4 thus may receive a, preferably immediate or instantaneous, feed-back, i.e. information about amounts of resource consumption and/or feeding-in of by him and/or associated obligations and/or benefits. This provides an incentive for the consumer 4 to maintain or to change one or more of his activities. The notification to the consumer 4 of the received data associated with the consumer 4 by means of the display 56, on a regular temporal basis, e.g. each minute, hour or day, or after a request from the consumer 4, may determine the consumer's individual behaviour 58.

The tax accounting system 54 transmits the tax declaration and/or data associated with the tax declaration to other entities 57, preferably comprising smart grids, i.e. a type of electrical grid and electrical network which attempts to predict and intelligently respond to the behaviour and actions of all electric power users connected to it - suppliers, consumers and those that do both - in order to efficiently deliver reliable, economic, and sustainable electricity services, e-mobility systems, and load and traffic control management systems. These aforementioned entities 57, in connections with the influence of the consumer's individual behaviour 59, influence the external ecological and/or societal constraints 51 already mentioned above.

## Claims

1. A method of processing resource transfer data (2) associated with one or more individual consumers (4), comprising the steps of:
establishing a data connection to an electronic data base (1) storing resource transfer data (2) associated with one or more consumers (4) whereby the resource transfer data (2) indicate measurement data (20) about metered quantities of resources transferred between the respective consumers (4) and one or more respective resource providing entities;
accessing the data base (1) and retrieving from the data base (1) individual resource transfer data (2) associated with at least one consumer of the one or more consumers (4);
transmitting the retrieved data (2) via a data connection to a processing unit (62); and
generating, by the processing unit (62), a resource transfer declaration based on the at least one consumer's individual resource transfer data (2) whereby the resource transfer declaration specifies data about a resource transfer balancing.

2. A method according to claim 1,
**characterised in**
**that** the method further comprises the steps of:
receiving, by the data base (1), authentication data sent by an entity requesting an access to the data base (1);
validating the received authentication data by the data base (1); and
if the validation is successful, accepting, by the data base (1), the access to the data base (1) by the requesting entity.

3. A method according to claim 1,
**characterised in**
**that** the method further comprises the steps of:
forwarding the resource transfer data (2) to a further application,
preferably a tax accounting application, for further processing.

4. A method according to any of claims 1 to 3, **characterised in**
**that** the method further comprises the steps of:
receiving at the data base (1) the measurement data (20) about metered quantities of resources transferred between the respective consumers (4) and the one or more respective resource providing entities; and
storing the measurement data as the resource transfer data (2) in the data base (1).

5. A method according to claim 4,
**characterised in**
**that** receiving the measurement data (20) further comprises:
receiving, by the data base (1), authentication data sent by a meter (3); validating, by the data base (1), the received authentication data; and
if the validation is successful, accepting, by the data base (1), measurement data (20) about metered quantities sent by the meter (3).

6. A method according to claim 1,
**characterised in**
**that** generating the resource transfer declaration based on the at least one consumer's individual resource transfer data (2) comprises:
reading the at least one consumer's individual resource transfer data (2) from the data base (1);
balancing the measurement data (20) about at least one consumer's individual consumed and fed-in quantities of resources; and
sending data about the at least one consumer's balance to the respective consumer (4).

7. A method according to claim 6,
**characterised in**
**that** the data about the at least one consumer's balance is sent to an electronic device (55) of the respective consumer (4), preferably a mobile device.

8. A method according to claim 1,
**characterised in**
**that** the resources comprise one or more of: water, electricity, long-distance heating, gas, petrol, air.

9. A method according to any of the preceding claims, **characterised in**
**that** the method further comprises the steps of:
performing the processing in a communication network which is secured against unauthorised access.

10. A module (6) for processing an individual consumer's resource transfer data (2), comprising
a communication unit (61) adapted to establish a communication connection to an electronic data base (1) storing resource transfer data (2) associated with one or more consumers (4) whereby the resource transfer data (2) indicate measurement data (20) about metered quantities of resources transferred between the respective consumers (4) and one or more respective resource providing entities, access the data base (1) and retrieve from the data base (1) individual resource transfer data (2) associated with at least one consumer of the one or more consumers (4), and transmit the retrieved data (2) via a data connection;
and
a processing unit (62) adapted to receive the retrieved data (2) via a data connection and generate a resource transfer declaration based on the at least one consumer's individual resource transfer data (2) whereby the resource transfer declaration specifies data about a resource transfer balancing.

11. A module (6) according to claim 10,
**characterised in**
**that** the module (6) further comprises the data base (1).

12. A module (6) according to any of claims 10 and 11, **characterised in**
**that** the communication unit (61) is adapted to receive tariffing data and forward the data to the processing unit (62).

13. A computer program product for processing an individual consumer's resource transfer data, whereby the computer program product, when executed by a module (6), performs the steps of:
initiating an establishment of a data connection to an electronic data base (1) storing resource transfer data (2) associated with one or more consumers (4) whereby the resource transfer data (2) indicate measurement data (20) about metered quantities of resources transferred between the respective consumers (4) and one or more respective resource providing entities;
controlling an access to the data base (1) and a retrieval from the data base (1) of individual resource transfer data (2) associated with at least one consumer of the one or more consumers (4);
controlling a transmission of the retrieved data (2) via a data connection to a processing unit (62); and
controlling a generation, by the processing unit (62), of a resource transfer declaration based on the at least one consumer's individual resource transfer data (2) whereby the resource transfer declaration specifies data about a resource transfer balancing.
